# EUROPEAN PATENT APPLICATION

(11) **EP 3 893 288 A1**
(43) Date of publication of application: **13.10.2021**
(21) Application number: 20170745.2
(22) Date of filing: 21.04.2020
(51) Int. Cl.: H01M 2/04, H01M 10/06, H01M 2/12

(54) **A BATTERY COVER FOR PREVENTION OF ELECTROLYTE LEAKAGE IN A BATTERY**

(30) Priority: 10.04.2020 TR 202005789
(71) Applicant: Alfa Kutu Ve Plastik Sanayi Ticaret Ltd. STI., 59850 Tekirdag (TR)
(72) Inventor: CINOGLU, Özer, 34520 Istanbul (TR)
(74) Representative: Sevinç, Erkan

(57) **Abstract**

A battery cover (70) for prevention of liquid leakage in a battery (100), comprises a lower cover (10) hermetically attachable on an upper end of a battery case (90) that stores an electrolyte therein, wherein the lower cover (10) includes: a plurality of lower cells (11) arranged lengthwise on an inner surface of the lower cover (12), lower labyrinth walls (16) extending horizontally and vertically at spaced locations, and a lower flow channel (14) formed by the lower labyrinth walls (16) in each lower cell (11); an upper cover (20) mounted to an upper end of the lower cover (10), wherein the upper cover (20) includes: a plurality of upper cells (21) arranged lengthwise on an inner surface of the upper cover (22), upper labyrinth walls (27) extending horizontally and vertically at spaced locations, an upper flow channel (24) formed by the upper labyrinth walls (27) in each upper cell (21) and at least one filter (60); at least one intake port (50) provided on the inner surface of the lower cover (12); and a recovery port (13) located in each lower cell (11) for recovering the leaking liquid by collecting the leaking liquid and feeding the collected liquid into the battery (100). Each lower cell (11) has an independent and separate lower flow channel (14) from other lower cells (11), and each lower cell (11) and upper cell (21) include separate filter channels (19) to reach the filter (60).

## Description

### Technical Field of the Invention

The present invention relates to a battery cover for the prevention of electrolyte leakage in a battery, more particularly to a battery cover suitable for use in lead-acid accumulators to effectively prevent any leakage.

### Background of the Invention

The devices that store electrical energy as chemical energy and give it as electrical energy when needed are called batteries. Under the nominal working conditions, when the chemical reaction is performed, heat is generated in the battery especially in the lead-acid batteries and causes the electrolyte to partially vaporize and a small quantity of hydrogen gas to be generated, so it is required to discharge the gas from the battery into the atmosphere.

In special cases such as a possible malfunction, crush or unsteady fast charging, there may be an intense gas occurrence. In such cases, while the gas is discharged from the battery, the electrolyte out from the battery case to the battery cover must be carefully returned to the cells and recovery ports. The battery covers can be insufficient in such harsh conditions (e.g., prolonged high charging, excessive vibration, high temperature) and the battery can lose its function very quickly. It is known in the art that the gases and chemical liquid solution coming out of the cells in the battery covers are directed in the channels of the cells. As the gas advance through the channel, it cools down and passes into the liquid phase by condensing.

In the art, gases and liquid coming out of all cells are collected in a single channel and go to the gas discharge port, therefore, they cannot return to their own cells. This creates an imbalance in the liquid density in the battery cells and affects the battery life negatively. The evacuation of gas from each cell through a common single channel and mixture between the cells disrupts the current chemical fluid balance and reduces the battery life.

The electrolyte may come to the filter with the increase of pressure in the battery for various reasons, and the filter may cause clogging of the filter pores due to the lead oxide dust in the electrolyte. In some designs, while a single filter is used in the discharge port, it is seen that the dense gas and liquid formed in extraordinary conditions reach the discharge hole. Adding another filter as a secondary barrier to the single discharge port is used to prevent the liquid eruption.

It is required that an electrolyte be prevented from leaking from the battery to the outside through the gas discharge port.

### Summary of the Invention

The object of the present invention is to eliminate the above-mentioned drawbacks. The present invention is directed to a leak-resistant battery cover for batteries, and especially for batteries that are under extreme conditions.

According to the present invention, the battery cover can efficiently discharge gas from the battery while preventing leakage of electrolyte without increasing the number of parts, thereby maintaining the production cost at the desired level, and which can recover the leaking electrolyte by collecting the leaking electrolyte and feeding the collected electrolyte into the battery.

The present invention proposes a battery cover for the prevention of electrolyte leakage of a battery. According to the present invention, the battery cover comprises: a lower cover hermetically attachable on an upper end of a battery case that stores an electrolyte therein, wherein the upper cover includes: a plurality of lower cells arranged lengthwise on an inner surface of the lower cover, lower labyrinth walls extending horizontally and vertically at spaced locations, and a lower flow channel formed by the lower labyrinth walls in each lower cell; an upper cover mounted to an upper end of the lower cover, wherein the upper cover includes: a plurality of upper cells arranged lengthwise on an inner surface of the upper cover, upper labyrinth walls extending horizontally and vertically at spaced locations, an upper flow channel formed by the upper labyrinth walls in each upper cell; at least one intake port provided on the inner surface of the lower cover; at least one filter; and a recovery port located on each lower cell for recovering the leaking liquid by collecting the leaking liquid and feeding the collected liquid into the battery. According to an advantageous development of the invention, each lower cell has an independent and separate lower flow channel from other lower cells; and each lower cell and upper cell include a separate filter channel to reach the filter. Thus, the condensed gas always returns to its own cell, the liquid electrolyte balance is maintained and a long-life battery is obtained. The return time of the condensed gas in the different channels of the cells is the same for all cells which help to obtain a steady and durable battery.

In a possible embodiment, the upper cover comprises at least one closure region to match and close the intake port on the lower cover when the upper cover is closed. Thus, it is obtained a completely insulated design by tightly closing the top cover, and the use of an apparatus is facilitated.

In a possible embodiment, the cross-section of the lower flow channel formed within the lower cells differs from other lower flow channels. Thus, separation of the gas and the liquid is enhanced.

In a possible embodiment, the battery cover comprises a series of pressure reducing zones formed for the separation of liquid and gas in places where the cross-section of the lower flow channel expands. Thus, the movement of gas and chemical liquid solutions together is prevented, separation of the gas and the liquid is enhanced. While the amount of liquid decreases gradually by passing through the pressure reducing zones, the gas moves towards the filter channel to be discharged quickly.

In a possible embodiment, each lower flow channel in lower cells includes a flow blockage protrusion which prevents the liquid from passing into the filter channel. Thus, any possibility of the liquid passing to the filter is eliminated. An adverse effect of the liquid on the filter is prevented.

In a possible embodiment, the lower labyrinth walls in each lower cell and the upper labyrinth walls in each upper cell are symmetrical with each other and when the upper cover is closed on the lower cover, the lower labyrinth wall and the upper labyrinth wall overlaps and forms a common flow channel. Thus, the gas flow between the cells is ensured to travel equally in the existing lower flow channel and upper flow channel up to the filters while preventing any jumping of the liquid and gas from cell to cell in possible backflows.

In a possible embodiment, the upper cover comprises two filters that are spaced apart from each other. Moreover, the battery cover may comprise two filter housings, each filter housing is in connection with three lower cells and upper cells. Thus, the filter housings are separated into two subgroups and the uniform flow is obtained.

In a possible embodiment, both lower cover and upper cover comprise an independent bypass channel that connects only the filter housings with each other. If one of the filters at the filter housing is blocked, the gas to be exhausted is provided to reach another one of the filter housing with a filter that provides extra security. In a possible embodiment, the upper cover can have two filter housing but only one of the filters housing is attached with the filter. In the case of only one filter is used, gas flow on each separate cell continues to be isolated from other cells as well via the bypass channel.

In a possible embodiment, the lower cover comprises more than one filter housing in communication with the filter channels wherein said filter housing is shaped and dimensioned with respect to the filter provided on the upper cover.

In a possible embodiment, the intake ports are aligned on the same longitudinal axis of the battery cover.

In a possible embodiment, the recovery port comprises an extension wall surrounding the recovery port in at least half-crescent form. Thus, the liquid and gas are largely trapped therein.

In a possible embodiment, each lower cell comprises a single recovery port that is configured to the only place that allows the liquid and gas exhaust from the battery case to the battery cover. The recovery ports help to separate the liquid and gas from each other at the beginning of the flow. Furthermore, the recovery port structure avoids the outflow of the electrolyte contained therein when the battery is overturned in any position.

In a possible embodiment, the recovery port comprises a funnel-shaped member in the form of a frusto-conical with an upper hole that allows the gas to be guided, and at least one aperture formed at the bottom of the recovery port that allows to the recovery of the liquid that comes from the batter case.

In a possible embodiment, the upper cover comprises an upper extension member formed on the inner surface of the upper cover, which surrounds the recovery port when closed and is suitable for preventing the liquid from rising to the top of the recovery port.

### Brief description of the figures

The accompanying drawings are given solely for the purpose of exemplifying the invention whose advantages over prior art were outlined above and will be explained in detail hereinafter:
Figure 1 is a perspective view of a battery with a battery cover according to the present invention.
Figure 2 is a perspective view of the battery cover with the battery wherein an upper cover of the battery cover is removed, according to the present invention.
Figure 3 is a perspective view of a lower cover of the battery cover according to the present invention.

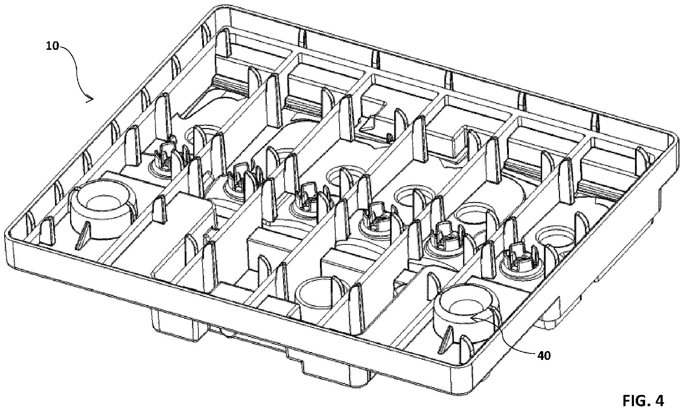

Figure 4 is a rotated perspective view of the lower cover shown in Fig. 3.
Figure 5a is a perspective view of the upper cover of the battery cover according to the present invention.
Figure 5b is a rotated perspective view of the upper cover shown in Fig. 5a.
Figure 6a is a top view of the top cover of a battery cover according to the present invention.
Figure 6b is a top view of the rotated position of the upper cover shown in Fig. 6a.
Figure 7 is a top view of the lower cover according to the present invention.
Figure 8 is a top view showing the pressure reducing zones on the lower cover shown in Fig. 7.
Figure 9 is a top view showing the flow path on the lower cover according to the present invention.
Figure 10 is a top view showing the slopes on the lower cover according to the present invention.

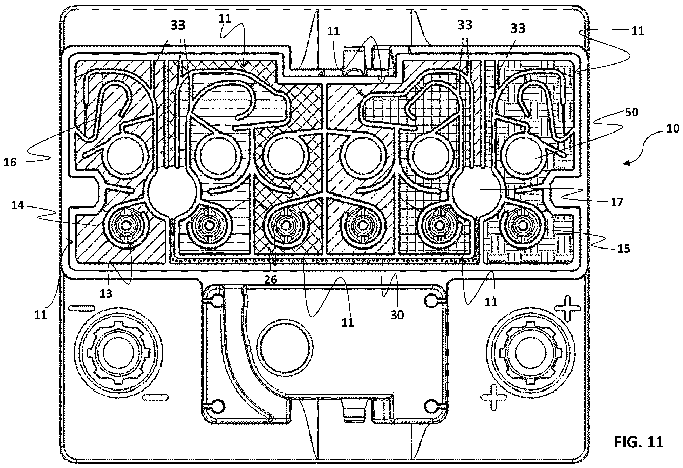

Figure 11 is a top view showing each individual lower cell on the lower cover and each channel of the lower cells according to the present invention.
Figure 12a is a top view of the battery cover wherein the inner elements of the lower cover are shown, according to the present invention.
Figure 12b is a cross-sectional view of the battery cover, cut along the E-E section shown in Fig. 12a.
Figure 12c is an enlarged view of the "G" region shown in Fig. 12b.
Figure 12d is a perspective view of the "G" region shown in Fig. 12b.
Figure 12e is a rear perspective view of the recovery port shown in Figs. 12c and 12d.

### Detailed description of the figures

According to the present invention, a battery cover (70) generally comprises a lower cover (10) and a hermetically sealed upper cover (20).

Said battery cover (70) for prevention of liquid leakage in a battery (100), comprises the lower cover (10) hermetically attachable on an upper end of a battery case (90) that stores an electrolyte therein, the upper cover (10) includes: a plurality of lower cells (11) arranged lengthwise on an inner surface of the lower cover (12), lower labyrinth walls (16) extending horizontally and vertically at spaced locations, and a lower flow channel (14) formed by the lower labyrinth walls (16) in each lower cell (11); an upper cover (20) mounted to an upper end of the lower cover (10), wherein the upper cover (20) includes: a plurality of upper cells (21) arranged lengthwise on an inner surface of the upper cover (22), upper labyrinth walls (27) extending horizontally and vertically at spaced locations, an upper flow channel (24) formed by the upper labyrinth walls (27) in each upper cell (21) and at least one filter (60); at least one intake port (50) provided on the inner surface of the lower cover (12); and a recovery port (13) located in each lower cell (11) for recovering the leaking liquid by collecting the leaking liquid and feeding the collected liquid into the battery (100). Each lower cell (11) has an independent and separate lower flow channel (14) from other lower cells (11), and each lower cell (11) and upper cell (21) include separate filter channel (19) that reaches the filter (60).

In particular, as the current coming into the battery (100) increases, the electrolyte (as a chemical liquid solution) in the battery box (90) starts to boil and emit more gas than it should be. In such extreme cases, it is desirable to recover the liquid exiting the battery (100) in the same way, but the continuous and dense gas discharge in the battery (100), which is exposed to a high current compared to the normal operation of the battery (100), increases liquid and gas losses and makes recovery difficult. According to the present invention, each lower cell (11) includes independent lower labyrinth walls (16) and a lower flow channel (14). The lower labyrinth walls (16) are formed by a plurality of walls spaced from one another, each pair of said walls defining a sector. The lower labyrinth walls (16) form a labyrinth structure that can increase resistance to the movement of a leaking liquid and can recover the leaking liquid while preventing leakage of the liquid. The entirety of the sectors defined by said walls defines a closed space portion of the cells. Besides, each lower cell (11) and upper cell (21) include at least one filter channel (19) independent of other cells, to reach at least one filter housing (17) positioned on the upper cover (20). With this arrangement, the leaked electrolyte and dense gas are properly guided and kept in each cell by eliminating any mixing. The lower cells (11) is arranged in a single row next to one another in the lower cover (10) and be of essentially parallelepipedal shape.

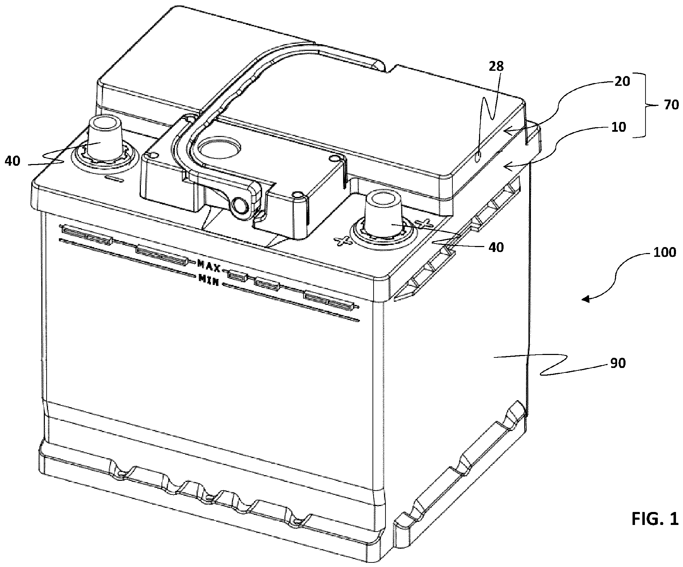

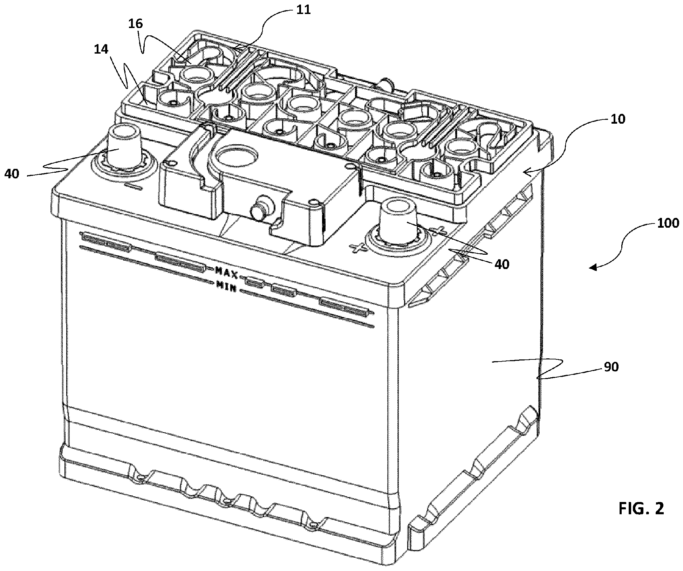

In a possible embodiment, the battery cover (70) may comprise cells suitable for 2 volts and the number of cells differs according to the voltage desired to be taken from the battery (100). For example, in a 12-volt battery (100), six lower cells (11) and upper cells (21) can be provided. As can be seen in Figs. 1-3, the outer periphery of the lower cover (10) is positioned higher compared to where the terminal (40) is provided.

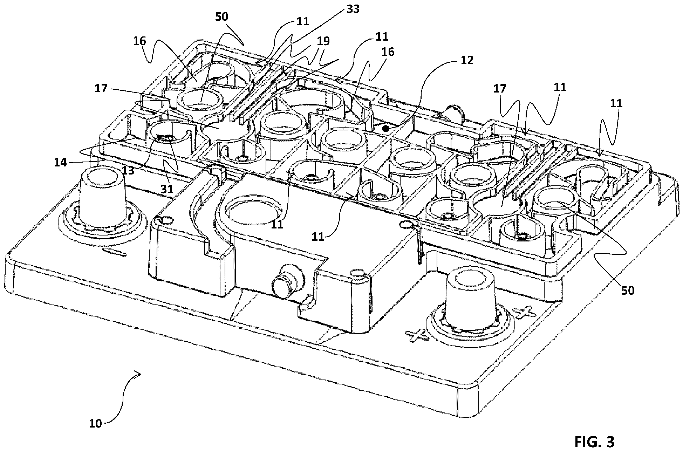

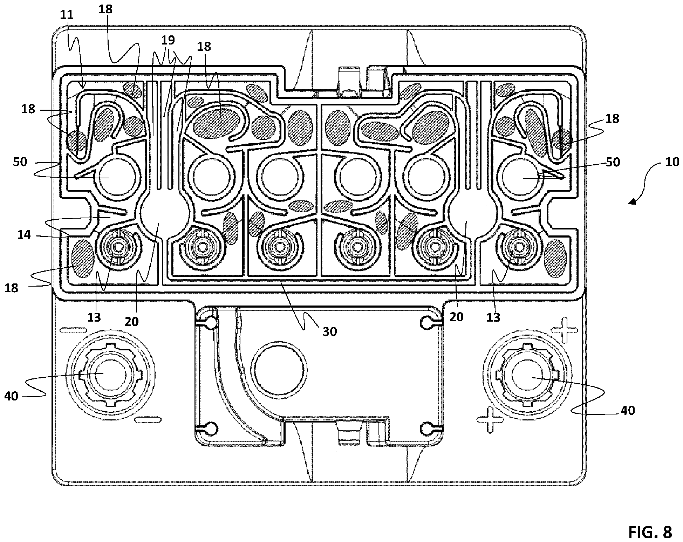

According to the present invention, the filter (60) is provided at the upper cover (20) and the number of the filter (60) can vary. As can be seen in Fig. 3, a series of independent lower cells (11) extending across the inner surface of the lower cover (12) are provided, similarly, a series of independent upper cells (21) extending across the inner surface of the upper cover (22) are provided. Each of the lower cells (11) has its canal structure, each lower cell (11) has a plurality of lower labyrinth walls (16) that allows a labyrinth structure to be formed wherein said labyrinth walls (16) can extend in the form of the curve and the direction of horizontal and vertical. Similarly, the upper labyrinth walls (27) within each upper cell (21) is formed by the protrusion and recess structures, and each upper cell (21) has such an upper flow channel (24). The cross-section of the lower flow channel (14) formed within each lower cell 11 differs; thus, a series of pressure reducing zones (18) are formed for liquid and gas separation where the cross-section of the lower flow channel (14) expands. By enlarging the channel through the channel at certain intervals, pressure reducing zones (18) are created which helps to the separation of the gas and liquid from each other. In Figure 8, pressure reducing zones (18) are shown, especially in elliptical form. Similarly, the same pressure-reducing zones (18) can be formed on the upper cover (20), which is symmetrical of the lower cover (10). Effective decomposition prevents the acid solution in the liquid reaching the filters (60) and wetting the filter and blocking the filter.

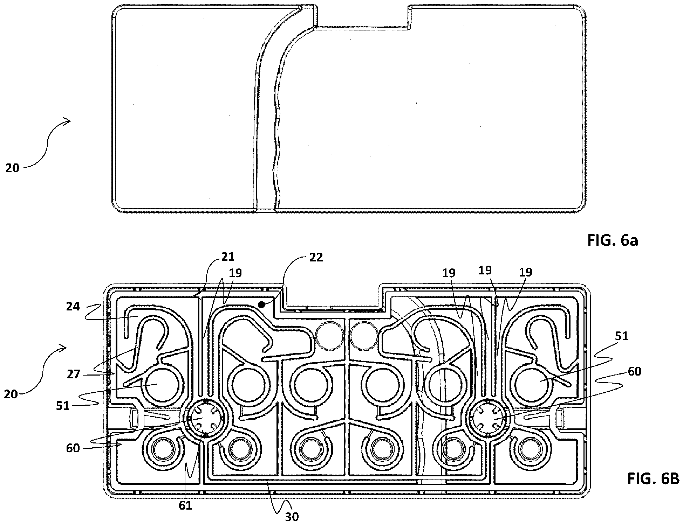

As can be seen in Figure 8, each lower cell (11) is equipped with an intake port (50) which has a round, oval or rectangular cross-section for insertion of the required of the chemical liquid solution wherein the intake port (50) communicates with respective chambers which are defined as divided spaces in the battery case (90) by a plurality of partition walls. A valve can be inserted into each intake port (50). After the battery cover (70) is attached to the battery box (90), the chemical liquid solution is filled from the intake ports (50). As can be seen in Fig. 6b, the upper cover (20) comprises at least one closure region (51) to match the intake port (50) on the lower cover (10) when the upper cover (20) is closed. Said intake ports (50) are shaped and sized in accordance with the closing region (51) and are sealed by closing the upper cover (20). In a preferred embodiment of the invention, said intake ports (50) are arranged in the same longitudinal axis. In particular, these intake ports (50) are positioned to be aligned in the middle of each lower compartment (11). Figure 8 shows the intake ports (50) in each lower cell (11) with the same longitudinal axis direction.

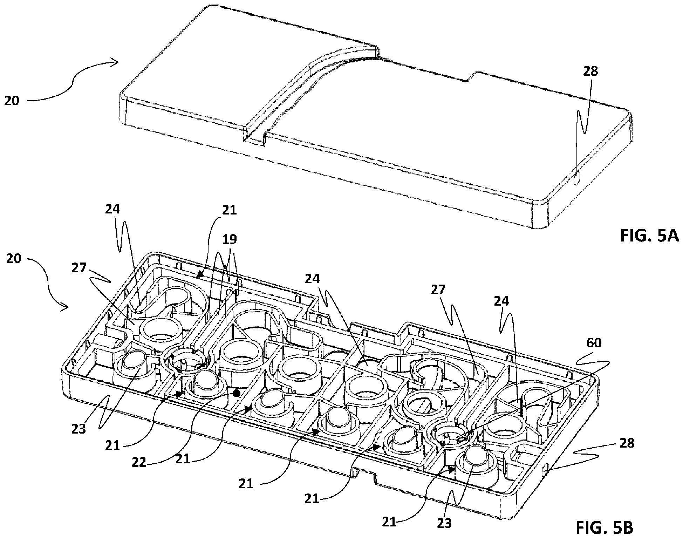

Referring to the Figures 5a and 5b, the filter (60) allows a certain gas to exhaust and eliminates and prevents the risk of explosion of hydrogen gas inside the battery (100) with a spark that may come from outside of the battery (100). In the event that the gas encounters a spark at the exit point, the filter (60) is formed as a "flame arrester" apparatus. Furthermore, the filter (60) is used in the proximity of a gas discharge port (28) to prevent the spark from entering the battery (100) and causing an explosion. The discharge port (28) is provided to discharge hydrogen gas generated from the charge and discharge processes and to discharge gas generated from the evaporation of the liquid, such as an electrolyte. Accordingly, each filter 60 and also especially filter housing (17) is connected to at least one discharge port 28 that opens out. Also, since each filter (60) is preferably located on the upper cover (20), the discharge port (28) is also located on the upper cover (20). The upper cover (20) comprises at least one discharge port (28) on said upper cover (20), which is formed to discharge gas, in connection with the filter (60) provided on the upper cover (20). In some embodiments, the number of the filter housing (17) can vary and the number of the filter (60) compared to the filter housing (17) can be less.

In a possible embodiment, the upper and lower cover (10, 20) are preferably adhered together with hot adhesion and provided with at least one discharge port. The gases to be discharged preferably pass through the lower cover (10) of the battery cover (70). According to the present invention, advantageously, the gas and liquid passing through each lower and upper cell (11, 21) are guided through a separate and individual channel of the cells. The gas and liquid reach the filter (60) without any transition and mixture between the lower and upper cells (11, 21).

As stated above, each of the lower and upper cells (11, 21) in the battery cover (70) has its channel structure; for example, referring to Fig. 3, six lower cells (11) can be used, the three cells on the left and the three cells on the right are preferably identical. Similarly, the lower cells (11) and the upper cells (21) are symmetrical to each other. These lower cells (11) and upper cells (21), formed in the form of a triple subset, can also be in different structures. In summary, although the structure and forms of the lower cell (11) and the upper cell (21) vary, the time it takes for the gas to reach the filter (60) is adjusted to be equal to the time in other channels.

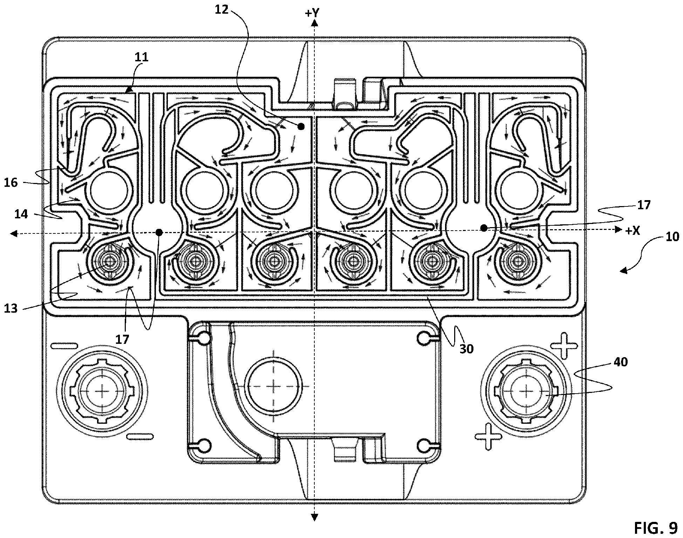

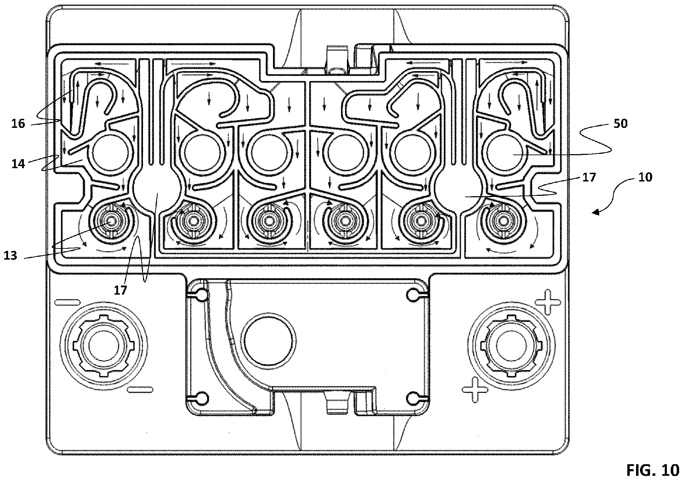

As can be seen in Figure 3; in addition to the pressure reducing zones (18) that will prevent the liquid from advancing by introducing the gas, in the connection of the lower flow channel (14) with the filter channel (19), there is a flow blockage protrusion (33) that will stop the liquid to pass the filter channel (19). Each flow blockage protrusion (33) is only provided at the lower cover (10) which helps only the gas pass to the filter channel (19). Since there is no such flow blockage protrusion (33) in the upper cover (20), there is an aperture through which the gas passes to the upper cover (20) and passes through the filter channel (19). These flow blockage projections (33) are preferably at the same level as the lower labyrinth walls (16). In Figures 9 and 10, the return path of the liquid is indicated by flow arrows after blocked by the flow blockage protrusions (33). It should also be pointed out that the inner surfaces (12) of the lower cover (10) are especially inclined at the ends and the areas close to the walls and it is aimed that the liquid will move to the desired areas when the liquid returns.

The lower labyrinth walls (16) can be configured differently in each cell, including a series of indentations, to form the channel structure having a varying cross-section. Said filter channel (19) is an extension of the lower flow channel (14) in each lower cell and likewise, the filter channel (19) at the upper cover (20) is also an extension of the upper flow channel (24) in each upper cell (21). Said filter channel (19) reaches the filter (60) in a perpendicular direction with respect to the longitudinal axis (X) of the battery cover (70), in a possible embodiment the width of the filter channel (19) can be formed in different cross-sections and twisted.

In a preferred embodiment of the invention, the lower labyrinth wall (16) in each lower cell (11) and the upper labyrinth wall (27) in each upper cell (21) are symmetrically constructed (except for the flow blockage projections (33)). When the upper cover (20) is closed on the lower cover (10), the lower labyrinth wall (16) and the upper labyrinth wall (27) overlap and form a common flow channel. The liquid and gas travel through these common channels and separations occur in certain regions thanks to the labyrinthic structure where the cross-section decreases and increases. Thanks to these separations, only gas reaches the filter (60) and is discharged through the discharge port (28). In the preferred embodiment of the invention, two filters (60) are provided on the upper cover (20) of the battery cover (70). Besides, each filter (60) is connected to three lower cells (11) and upper cells (21) and three independent filter channels (19) each. These filter channels (19) can extend to the filter (60) side by side. Moreover, a filter housing (17) is provided on the lower cover (10) which is shaped and dimensioned with respect to the filter (60) and is connected with filter channels (19) of the lower cover (10).

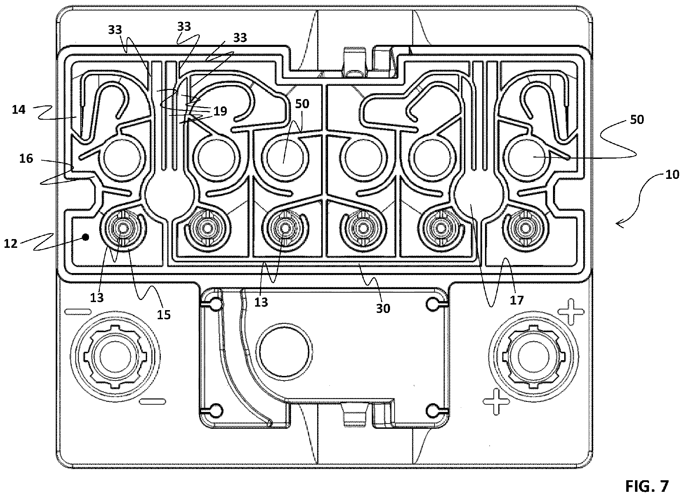

Said filters (60) have a direct connection from each filter (60) to the other filter (60) in case of clogging. When two or more filters (60) are used, there is an independent bypass channel (30) between the filter housings (17) that connects only the filter housings (17). As can be seen more clearly in Figure 7, each filter housing (17) is connected by a single bypass channel (30). Said bypass channel (30) can be extended symmetrically with a certain cross-section on both the lower cover (10) and the upper cover (20).

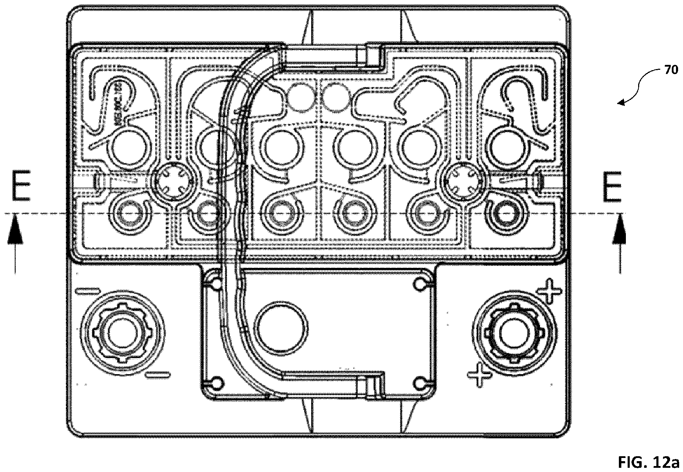

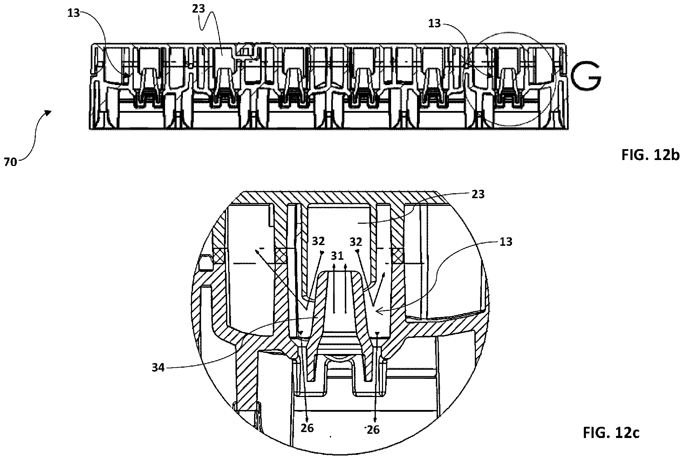

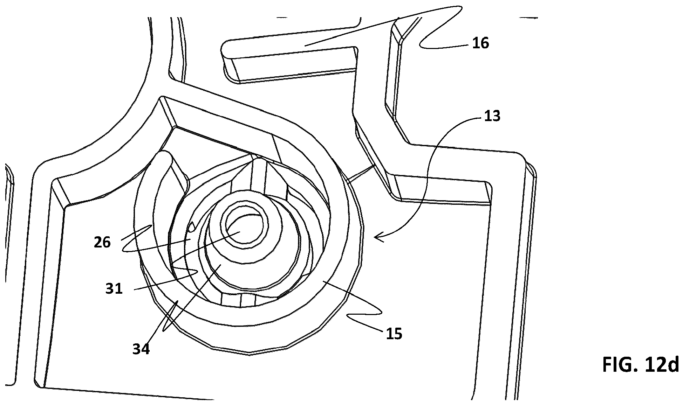

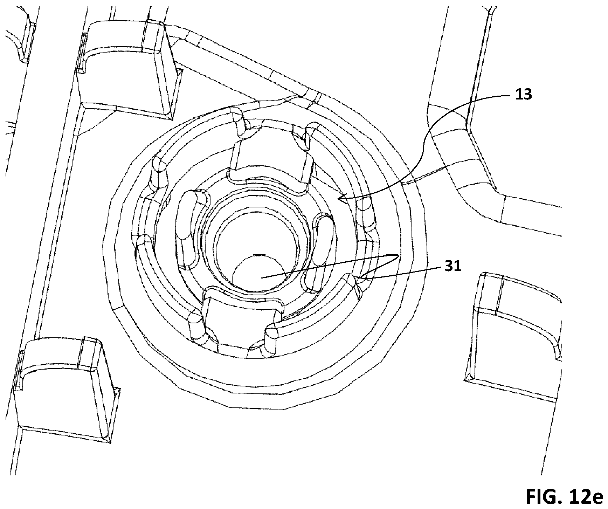

In operation, the heat that is generated during electrolysis causes the electrolyte and water in the electrolyte to evaporate. This evaporation is referred to as "gassing". Gassing of the cell occurs at any point the battery (100) reaches the hydrogen overvoltage, producing bubbles that break at the surface introducing a mist into the venting gas stream. When the liquid starts to bubbling with heat, it rises to the upper level of the lower cover (10) by trying to go out. As the heated gas tends to increase, funnel-shaped members (34) in the form of frusto-conical are used. The funnel-shaped element (34) is in the form of a truncated cone or hollow cylindrical form, allowing for rising gas outlet. Said funnel-shaped member (34) comprises an upper hole (31) formed as a through-hole. When the gas rises in the funnel-shaped member (34) of the recovery port (13), it goes out from the upper hole (31) of the funnel-shaped members (34). On the other hand, the liquid moves in the labyrinth structure formed on the lower cover (10). Said recovery port (13) is provided with an extension wall (15) surrounding said recovery port (13) in at least half crescent shape. When the battery cover (70) is in use, the recovery port (13) is the only place for the battery cover (70) where the gas and/or liquid comes. Regarding Figure 12c, there is a top opening at the upper end of said recovery port (13) that allows the rising and exiting of the heated gas and an aperture (26) that allows liquid transition at the bottom. Besides, in a preferred embodiment of the invention, the upper cover (20) is provided with an upper enclosing element (23) that is suitable to prevent the liquid from rising to the top of the recovery port (13). Each recovery port (13) can have more than one aperture (26) formed at the bottom of the recovery port (13). Regarding figures 12d and 12e, the recovery port (13) is configured to recover the leaking liquid by collecting the leaking liquid and feed the collected liquid into the battery (100). Referring to the Figure 12c, when the upper cover (20) is closed, a lateral opening (32) is formed and surrounds the funnel-shaped member (34) for directing gas thereof. Gas exits both from this lateral opening (32) and through the upper hole (31). The lower part of said upper enclosing element (23) is inclined and facilitates the directing of the condensing gas.

In an alternative embodiment of the invention, the filter (60) can be attached to the existing filter housing (17) to prevent the battery (100) from being exposed by vibration and is preferably sealed. In an alternative embodiment of the invention, said battery cover (70) can be used in fully closed batteries (MF) (100). Said battery (100) may be an electrochemical accumulator or a lead-acid accumulator suitable for use in vehicles, especially in cars, trucks or the like.

### Reference numbers:

- 10.: Lower cover
11. Lower cell
12. Inner surface of lower cover
13. Recovery port
14. Lower flow channel
15. Extension wall
16. Lower labyrinth wall
17. Filter housing
18. Pressure-reducing zone
19. Filter channel
- 20.: Upper cover
21. Upper cell
22. Inner surface of upper cover
23. Upper enclosing member
24. Upper flow channel
26. Aperture
27. Upper labyrinth wall
28. Discharge port
- 30.: Bypass channel
31. Upper hole
32. Lateral opening
33. Flow blockage protrusion
34. Funnel shaped member
- 40.: Terminal
- 50.: Intake port
51. Closure region
- 60.: Filter
- 70.: Battery cover
- 90.: Battery case
- 100.: Battery

## Claims

1. A battery cover (70) for prevention of liquid leakage in a battery (100), comprising:
- a lower cover (10) hermetically attachable on an upper end of a battery case (90) that stores an electrolyte therein, wherein the lower cover (10) includes: a plurality of lower cells (11) arranged lengthwise on an inner surface of the lower cover (12), lower labyrinth walls (16) extending horizontally and vertically at spaced locations, and a lower flow channel (14) formed by the lower labyrinth walls (16) in each lower cell (11);
- an upper cover (20) mounted to an upper end of the lower cover (10),
wherein
the upper cover (20) includes: a plurality of upper cells (21) arranged lengthwise on an inner surface of the upper cover (22), upper labyrinth walls (27) extending horizontally and vertically at spaced locations, an upper flow channel (24) formed by the upper labyrinth walls (27) in each upper cell (21);
- at least one intake port (50) provided on the inner surface of the lower cover (12);
- at least one filter (60); and
- a recovery port (13) located on each lower cell (11) for recovering the leaking liquid by collecting the leaking liquid and feeding the collected liquid into the battery (100) **characterized in that**
each lower cell (11) has an independent and separate lower flow channel (14) from other lower cells (11), and each lower cell (11) and upper cell (21) include a separate filter channel (19) that reaches the filter (60).

2. The battery cover (70) according to claim 1, wherein the upper cover (20) comprises at least one closure region (51) to match and close the intake port (50) on the lower cover (10) when the upper cover (20) is closed.

3. The battery cover (70) according to claim 1 or 2, wherein the cross-section of the lower flow channel (14) formed within the lower cells (11) differs from other lower flow channels (14).

4. The battery cover (70) according to any of the preceding claims, wherein the battery cover (70) comprises a series of pressure reducing zones (18) formed for the separation of liquid and gas in places where the cross-section of the lower flow channel (14) expands.

5. The battery cover (70) according to any of the preceding claims, wherein each lower flow channel (14) in lower cells (11) includes a flow blockage protrusion (33) which prevents the liquid from passing into the filter channel (19).

6. The battery cover (70) according to any of the preceding claims, wherein the lower labyrinth walls (16) in each lower cells (11) and the upper labyrinth walls (27) in each upper cells (21) are symmetrical with each other and when the upper cover (20) is closed on the lower cover (10), the lower labyrinth wall (16) and the upper labyrinth wall (27) overlaps and forms a common flow channel.

7. The battery cover (70) according to any of the preceding claims, wherein the upper cover (20) comprises two filter housing (17) that are spaced apart from each other.

8. The battery cover (70) according to claim 7, wherein the battery cover (70) comprises two filter housing (17), each filter housing (17) is in connection with three lower cells (11) and upper cells (21).

9. The battery cover (70) according to claim 7 or 8, wherein both lower cover (10) and upper cover (20) comprise an independent bypass channel (30) that connects only the filter housing (17).

10. The battery cover (70) according to any of preceding claims, wherein the lower cover (10) comprises more than one filter housing (17) in communication with the filter channels (19) wherein said filter housing (17) is shaped and dimensioned with respect to the filter (60) provided on the upper cover (20).

11. The battery cover (70) according to any of the preceding claims, wherein the intake ports (50) are aligned on the same longitudinal axis of the battery cover (X).

12. The battery cover (70) according to any of the preceding claims, wherein the recovery port (13) comprises an extension wall (15) surrounding the recovery port (13) in at least half-crescent form.

13. The battery cover (70) according to any of the preceding claims, wherein each lower cell (11) comprises a single recovery port (13) that is configured to the only place that allows the liquid and gas exhaust from the battery case (90) to the battery cover (70).

14. The battery cover (70) according to any of the preceding claims, wherein the recovery port (13) comprises a funnel-shaped member (34) in the form of a frusto-conical with an upper hole (31) that allows the gas to be guided, and at least one aperture (26) formed at the bottom of the recovery port (13) that allows the recovery of the liquid that comes from the battery case (90).

15. The battery cover (70) according to any of preceding claims, wherein the upper cover (20) comprises an upper enclosing member (23) formed on the inner surface of the upper cover (22), which surrounds the recovery port (13) when closed and is suitable for preventing the liquid from rising to the top of the recovery port (13).
